(19)

Europäisches
Patentamt
European
Patent Office
Office européen
des brevets

(11) **EP 2 815 913 A1**

(12) **EUROPEAN PATENT APPLICATION**

(43) Date of publication:
**24.12.2014 Bulletin 2014/52**

(51) Int Cl.:
***B60L 11/18*** *(2006.01)*

(21) Application number: **14172484.9**

(22) Date of filing: **16.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.06.2013 IT MI20131009**

(71) Applicant: **Eutecne S.p.A.**
**20124 Milan (IT)**

(72) Inventors:
• **Bosia, Giorgio**
**16144 GENOVA (IT)**
• **Dannier, Adolfo**
**80145 NAPOLI (IT)**
• **Iannuzzi, Diego**
**80100 NAPOLI (IT)**

(74) Representative: **Grimaldo, Andrea et al**
**Franco Martegani S.r.l.**
**Via Carlo Alberto, 41**
**IT-20900 Monza (MB) (IT)**

(54) **Recharging system for electric vehicles**

(57)     A recharging system (1) for electric vehicles (EVs) is described comprising an input stage (3) for connection to an alternating current electric distribution grid (4), an output stage (5) for connection to an electric vehicle (EV), a conversion stage (2) for converting an alternating voltage into a direct one and a control unit adapted to control operation of the conversion stage (2).

The conversion stage (2) is placed between the input stage (3) and the output stage (5) and it comprises a multilevel AC-DC converter. The multilevel converter comprises a plurality of sub-modules (SMs) connected with each other to define conversion level of the converter. At least one of these sub-modules comprises an energy storage device (102) and/or an energy source (PV) connected to an inverter. The control unit connects the energy storage device (102) and/ or the energy source (PV) to the output stage (5) for releasing energy stored in the storage device (102) and/or energy provided by the energy source (PV) respectively.

FIG.1

EP 2 815 913 A1

## Description

## TECHNICAL FIELD

The present invention relates to a recharging system for electric vehicles, and particularly, to a charging station for electric vehicles able to guarantee an ultra-fast charging of the electric vehicles (EVs) by means of current drawn from the national electric grid.

In details, the invention relates to a recharging system according to the preamble of claim 1.

## STATE OF THE ART

The diffusion of electric vehicles is still affected by many problems, which mainly derive from the interaction of such type of vehicles with the existing electric grid. Moreover, in order to have a wide diffusion in the field of non-polluting electric vehicles, they must have charging time comparable with refueling time of conventional Otto cycle or diesel vehicles.

For these reasons the electric vehicles require batteries characterized by both high stored energy capacity values and reduced charging time.

From this perspective, lithium batteries are a very interesting solution, since in the last years, as regards electric vehicles, they have shown a high potential and good performances as regards acceleration and distances that they can travel (driving range of the electric vehicle).

Currently the new technologies regarding lithium compounds allow a specific energy of 180 Wh/kg and a maximum charging rate of 6C to be reached, thus reducing the charging time to values of about ten minutes.

The low power charging modes (slow charging) are suitable for charging the batteries overnight, since they take $7 \div 8$ hours and guarantee low power absorption from the grid.

Actually, recent studies have shown that the daily use range of an electric vehicle is lower than 50 km for 80% of the cases.

For this reason such slow charging is acceptable for most of the users that travel distances of 100-150 km during the day.

Longer distances require frequent service stations along the route. In order to widespread the use of the electric vehicles, stations must be able to provide to the vehicle a considerable amount of energy with charging time similar to that of internal combustion vehicles, preferably lower than 5 minutes.

To accomplish this, the charging station has to supply a power ranging from 20 kW (in case of small city electric vehicles) to 250 kW (in case of heavy vehicles). A network of charging stations for electric vehicles able to satisfy the user needs therefore would cause a considerable increase in the power demand from the national electric grid, which however has not been designed with infrastructures able to meet such considerable increase in the power demand.

In order to reduce the impact of an ultra-fast charging on the grid it is known to provide to decouple the load (the electric vehicle) from the AC supply grid, by means of stationary energy storage systems. In this case, the energy storage system acts as a power buffer interposed between the grid and the vehicles under charging.

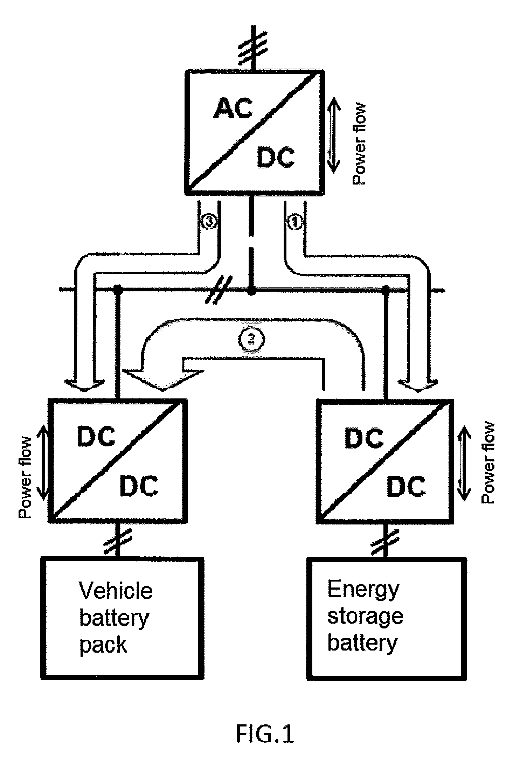

In this solution, shown in figure 1, the architecture of the recharging system is characterized by two conversion stages, with an high efficiency AC/DC converter (called as Grid Tie Converter) and two DC/DC converters.

The architecture for recharging electric vehicles EVs in figure 1 therefore can be seen as a DC bus architecture with three ports, connecting the main grid, the electric vehicles and the energy storage buffer.

The Grid Tie Converter converts alternating current from the grid into a direct voltage which is placed on DC bus; by suitably controlling the DC-DC converters of figure 1 it is possible to direct the power drawn from the grid to the buffer (flow F1) or to the electric vehicle (flow F3).

In order to charge the electric vehicle EV with high power, energy is drawn from the energy storage buffer (flow F2) and/or from the grid (flow F3) depending on the required power and on the charging strategy.

The recharging power coming from the high-efficiency AC/DC Grid Tie Converter depends on the power available from the buffer, and on the efficiency of the DC/DC direct current converters.

It is possible to consider two different strategies for managing energy for the ultrafast recharging architecture just described, which regard the designing of the AC/DC converter and the buffer battery: the load leveling strategy and the load displacement strategy.

The first strategy provides the mean charging power to be supplied by the main grid, while power peaks are provided by the buffer. That is to say, the converters are controlled such that the AC grid detects a substantially constant load and therefore it provides a power constant over time. However since the fast-recharging of the load provides a very high initial power peak, the DC-DC converter connected to the buffer is controlled such to supply a power flow variable over time and such to compensate the power not provided by the AC grid.

The load displacement strategy provides to store energy (from the AC grid) in the buffer overnight, when the overall load of the national electric grid is at a minimum. The buffer releases energy for recharging the electric vehicles EVs in the day, when the grid has a high load.

Thus the dimensions of the AC/DC converter may be reduced, considering that its operation is limited to low power recharging operations, during the buffering phase, and to withstand the discharging power from the buffer battery, when recharging the vehicle EV with high power.

OBJECTS AND SUMMARY OF THE INVENTION

The object of the invention is to develop a recharging system, e.g. a charging station, for electric vehicles able to overcome the drawbacks of the prior art.

Particularly the object of the present invention is to provide a recharging system for electric vehicles allowing the impact of the power peak on the AC grid side to be reduced during the fast or ultra-fast recharging of electric vehicles EV.

It is also an object of the present invention to provide a recharging system for electric vehicles allowing further energy sources to be used in addition to the national electric grid.

Particularly it is the object of the present invention to provide a recharging system that has a low environmental impact and that uses renewable sources for charging electric vehicles.

These and other objects of the present invention are achieved by a recharging system for electric vehicles embodying the characteristics of the annexed claims, which are an integral part of the present disclosure.

Particularly the general basic idea of the present invention is to use a modular multilevel converter integrated with energy accumulators and/ or generating sources, such as photovoltaic modules, in order to reduce the impact of power peak on the AC grid side during the fast or ultrafast recharging of electric vehicles EVs.

The use of modular architectures with a multilevel converter integrated in one or more of its sub-modules with energy generating sources, such as photovoltaic modules, and/or storage devices such as electrochemical batteries, lithium-ion capacitors and supercapacitors, is particularly advantageous and it allows different recharging strategies to be accomplished with the same structure.

Each sub-module, connected in series to the other ones on the AC alternating current side, allows the different voltage levels of the AC and/or DC grid, of the storage devices and of the generating sources (such as photovoltaic modules) to interface with the part related to the electric vehicle EV.

The sub-modules comprise a fixed number of connections of H bridge type or half-H bridge type connected in cascade and/or in parallel such to obtain the conversion of the desired energy (AC and/or DC).

Generally these are active rectifiers, isolated and non-isolated DC-DC boost converters (or step-up converters), and push-pull converters, each one being single phase or multi-phase.

The combination of different sub-module architectures for each leg allows a modular architecture to be obtained able to contemporaneously perform several different types of energy conversion.

Thus alternating current AC, direct current DC and hybrid recharging systems for electric vehicles EVs can be implemented.

For example, in one embodiment, the sub-modules of the multilevel converter are connected in cascade, with the DC outputs connected in series. This solution allows the direct voltages provided at the DC side of the sub-modules to be summed together, such to recharge the electric vehicle with a high direct voltage (at most equal to the rms value of the AC voltage of the electric distribution grid).

In another embodiment, the sub-modules of the multilevel converter are connected in cascade with the DC outputs connected in parallel. This solution allows the electric vehicle to be supplied with a low voltage, and consequently it allows the costs of the recharging system to be kept low, since the circuit components have to be dimensioned for withstanding lower currents.

Advantageously, in one embodiment the sub-modules of the multilevel converter are connected in cascade with the DC outputs connected to an interface circuit configured for dynamically connecting in series or in parallel the outputs of the sub-modules. This solution allows the same recharging system to be used in a different manner, supplying the electric vehicle with more or less high voltage depending on needs. Information about recharging needs of the electric vehicle for example can be provided to the control unit of the recharging system through a user interface or in another manner.

In one embodiment wherein the electric energy distribution grid is a multi-phase grid, the multilevel converter is connected to a first phase of the grid and, for each further phase of the electric distribution grid, at least one further multilevel converter equal to the one placed on the first phase is provided.

Then advantageously the multilevel converters can be connected in a star or triangle configuration such to distribute the power absorption on the three phases.

In one embodiment, the recharging system comprises an output multilevel AC-DC converter connected in parallel to a multilevel converter connected to the AC electric distribution grid. This solution allows alternating current recharging systems to be obtained: while the AC side of a modular multilevel converter is connected to the distribution grid, the output modular multilevel converter allows an output AC voltage to be drawn for recharging the electric vehicle.

In one embodiment, the output stage of the recharging system comprises an alternating current output in order to allow electric vehicles to be recharged with alternating current. The output multilevel converter comprises a plurality of legs connected in parallel to the multilevel converter, each one of said legs comprises a multilevel converter with a respective alternating current output, the control unit is adapted such to control the multilevel converters of said plurality of legs, such that at least two alternating current outputs of said plurality of legs are out of phase. Preferably, a plurality of outputs of the output multilevel converter are housed in a single electric socket wherein an electric plug of an electric vehicle to be recharged can be inserted; the control electronics of the recharging system is configured such to control the converters, e.g. H bridge or half-H bridge, present in the sub-modules of the individual legs, such that at the outputs present in the socket there are sinusoidal signals out of phase by the same angle.

Advantageously, a capacitor is placed in parallel to the output multilevel converter and to the input one, connected to the AC distribution grid. This allows possible noises to be filtered due to the switching of the switches of the sub-modules.

In a preferred embodiment, on the DC side of the output multilevel converter there is provided an electric socket for recharging electric vehicles with direct current. This solution allows a hybrid recharging system to be provided which allows electric vehicles to be recharged both with direct current and with alternating current. Advantageously the output multilevel converter comprises a plurality of sub-modules connected with each other to define conversion levels of the output converter, at least one of said sub-modules comprises a respective energy storage device and/or a direct current energy source, particularly a photovoltaic panel, connected to an inverter.

The invention further relates to a charging station for electric vehicles, comprising a box-like body intended to house a recharging system according to any of the preceding claims, an electric socket connected to the output stage of the recharging system for receiving a plug of an electric vehicle, and means, particularly terminals, for connecting the input stage of the recharging system to an alternating current electric distribution grid.

**BRIEF DESCRIPTION OF THE DRAWINGS**

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.

Fig.1 is a known ultra-fast recharging system.
Fig. 2 is three alternative circuit diagrams of the DC direct current recharging system that use a direct AC/DC conversion through a modular multilevel converter (MMC), in detail:

fig. 2a: is a solution with connection in series of the DC outputs of the sub-modules of the multilevel converter,
fig. 2b: is a solution with connection in parallel of the DC outputs of the sub-modules of the multilevel converter,
fig. 2c: is a solution with connection of the DC outputs of the sub-modules of the multilevel converter through interface circuit that dynamically changes the connection in series or in parallel of such outputs.

Fig. 3 is three alternative circuit diagrams of a DC direct current recharging system that use a direct AC/DC conversion through a modular multilevel converter (MMC) with star connection, in detail:

fig. 3a: is a solution with connection in series of the DC outputs of the sub-modules of the multilevel converter,
fig. 3b: is a solution with connection in parallel of the DC outputs of the sub-modules of the multilevel converter,
fig. 3c: is a solution with connection of the DC outputs of the sub-modules of the multilevel converter through interface circuit that dynamically changes the connection in series or in parallel of such outputs.

Fig. 4 is three alternative circuit diagrams of a DC direct current recharging system that use a direct AC/DC conversion through a modular multilevel converter (MMC) with triangle connection, in detail:

fig. 4a: is a solution with connection in series of the DC outputs of the sub-modules of the multilevel converter,
fig. 4b: is a solution with connection in parallel of the DC outputs of the sub-modules of the multilevel converter,
fig. 4c: is a solution with connection of the DC outputs of the sub-modules of the multilevel converter through interface circuit that dynamically changes the connection in series or in parallel of such outputs.

Fig. 5 is three alternative circuit diagrams of an AC alternating current recharging system that use an indirect AC/DC/AC conversion through two modular multilevel converters (MMC) connected in parallel.
Fig. 6 is a diagram of an AC alternating current recharging system that uses an indirect AC/DC/AC conversion through two modular multilevel converters (MMC) connected in parallel, wherein the recharging of the electric vehicle is integrated with photovoltaic modules (PV) on the side of the AC electric distribution grid.
Fig. 7 is a diagram of an AC alternating current recharging system that uses an indirect AC/DC/AC conversion through two modular multilevel converters (MMC) connected in parallel, wherein the recharging of the electric vehicle occurs also with photovoltaic modules (PV) on the leg that supplies with alternating current the electric vehicles EVs.
Fig.8 is a diagram of an AC alternating current and DC direct current hybrid recharging system that uses an indirect AC/DC/AC conversion through two modular multilevel converters (MMC) connected in parallel, wherein the recharging of the electric vehicle occurs also by the synergy between photovoltaic modules (PV) and batteries, on the side supplying with alternating current the electric vehicles EVs.
Fig. 9 is a diagram of an AC alternating current and DC direct current hybrid recharging system that uses an indirect AC/DC/AC conversion through two modular multilevel converters (MMC) connected in parallel, wherein the recharging of the electric vehicle is integrated with photovoltaic modules (PV) on the side of the AC electric distribution grid.
Figs. 10a,10b,10c,10d are non-isolated sub-modules of type:

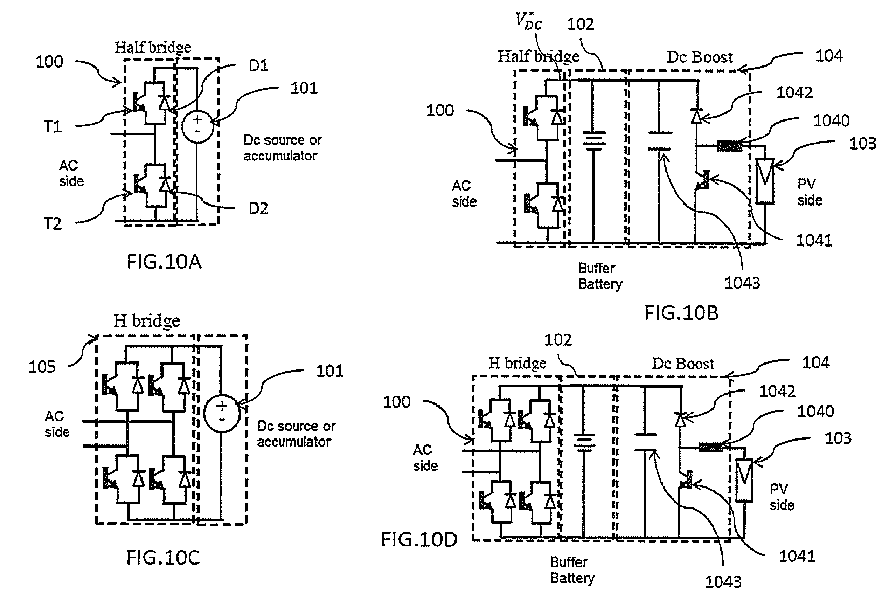

> fig.10a: is a solution using a half-H bridge,
> fig. 10b: is a solution using a half-H bridge and a DC boost integrated with photovoltaic modules PV and batteries,
> fig. 10c: is a solution using an H bridge,
> fig. 10d: is a solution using an H bridge and a DC boost integrated with photovoltaic modules PV and batteries;

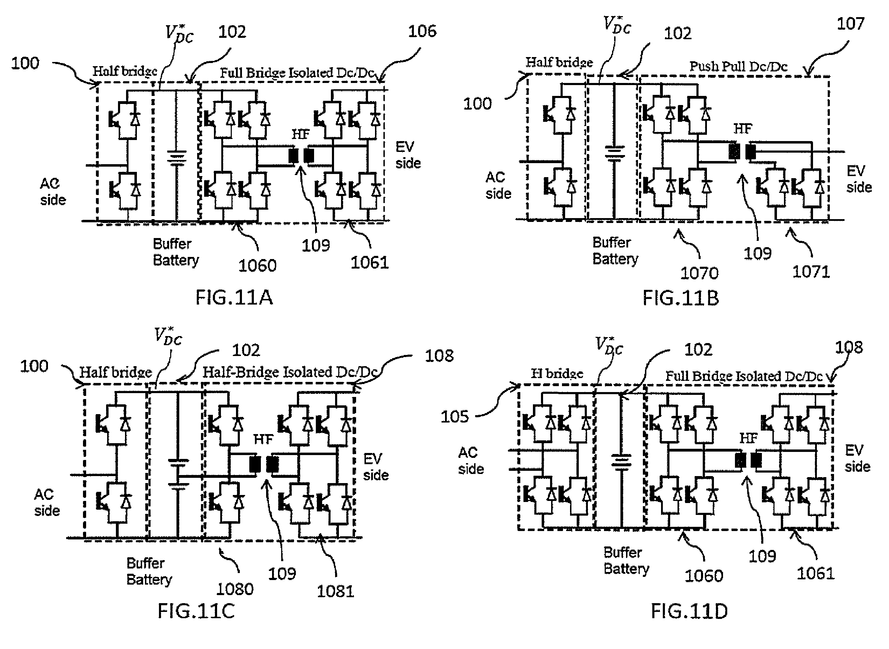

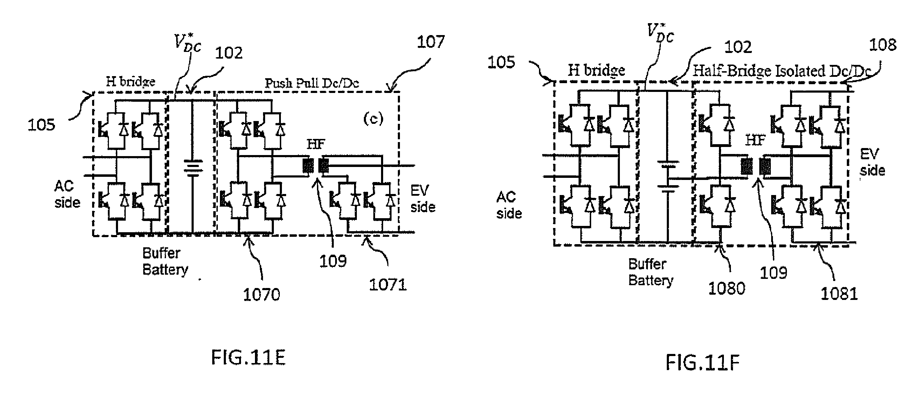

fig. 11 is some alternative embodiments of isolated sub-modules to be used in multilevel converters of the recharging system, in detail:

> fig. 11a: is a solution using a half-H bridge on AC side of the sub-module and an H bridge on the side of the electric vehicle EV,
> fig.11b: is a solution using a half-H bridge on AC side of the sub-module and a push-pull on the side of the electric vehicle EV
> fig.11c: is a solution using a half-H bridge on the AC side of the sub-module and a half-H bridge on the side of the electric vehicle with tap point at the center of the winding,
> fig. 11d: is a solution using a H bridge both on AC side of the sub-module and on the side of the electric vehicle EV,
> fig. 11e: is a solution using an H bridge on AC side of the sub-module and a push-pull on the side of the electric vehicle EV,
> fig.11f: is a solution using an H bridge on AC side of the sub-module and a half-H bridge on the side of the electric vehicle EV, with tap point at the center of the winding;

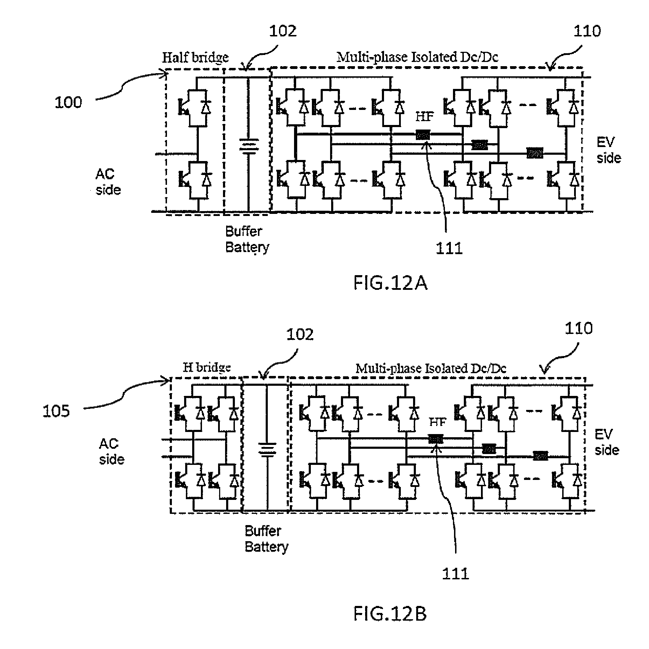

fig. 12 is alternative embodiments of isolated sub-modules on the side of the electric vehicle EV to be used in multilevel converters of the recharging system, in detail:

> fig. 12a: is a solution using a half-H bridge on the AC side of the sub-module and a DC/DC multi-phase converter;
> fig. 12b: is a solution using an H bridge on the AC side of the sub-module and a DC/DC multi-phase converter;

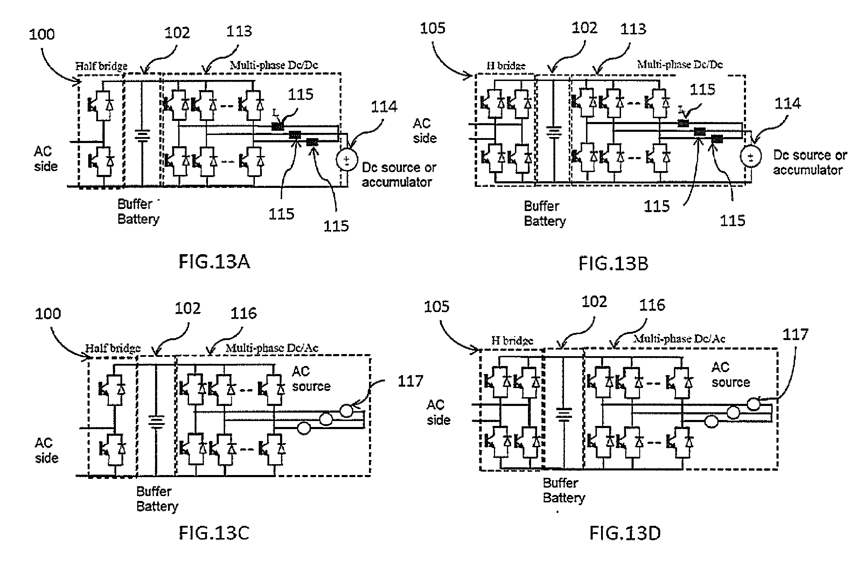

fig. 13 is alternative embodiments of sub-modules to be used preferably on the side of the AC alternating current side, in detail:

> fig. 13a: is a solution using a half-H bridge on the AC side of the sub-module and a DC/DC multi-phase converter for the connection to a DC energy source,
> fig. 13b: is a solution using an H bridge on the AC side of the sub-module and a DC/DC multi-phase converter for the connection to a DC energy source,
> fig. 13c: is a solution using a half-H bridge on the AC side of the sub-module and a DC/AC multi-phase converter for the connection to an AC energy source,
> fig. 13d: is a solution using a H bridge on the AC side of the sub-module and a DC/AC multi-phase converter for the connection to an AC energy source.

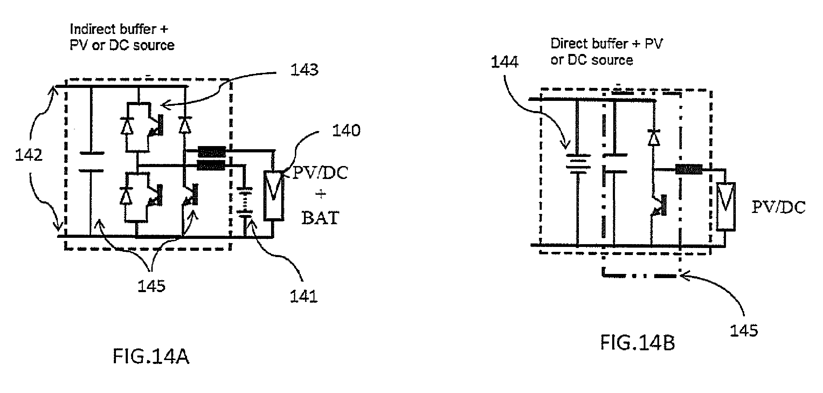

fig. 14 is two alternative modules for the integration in sub-modules of energy sources and energy storage devices in DC direct current, in detail:

> fig. 14a: is a solution providing the integration of an energy source and of a storage device at the low-voltage part of a booster.
> fig. 14b: is a solution providing the integration of a storage device at the high-voltage part of a booster.

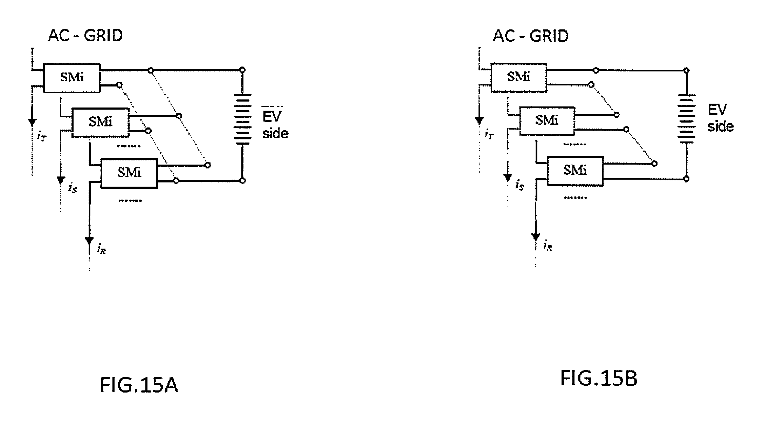

fig. 15 is alternative embodiments for the connection of the outputs of the different sub-modules of the multilevel converter of a recharging system according to the present invention, in detail:

> fig. 15a: is a solution providing the connection in parallel of the outputs of the sub-modules of different phases,
> fig.15b: is a solution providing the connection in series of the outputs of the sub-modules of different phases.

## DETAILED DESCRIPTION OF THE INVENTION

While the invention is susceptible of various modifications and alternative forms, some disclosed relevant embodiments are shown in the drawings and will be described below in detail.
It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc", "or" indicates non-exclusive alternatives without limitation unless defined otherwise.

The use of "including" means "including, but not limited to," unless otherwise defined. The description below discloses a recharging system for electric vehicles comprising

- an input stage for connection to an alternating current grid,
- an output stage for connection to an electric vehicle,
- a conversion stage for converting an alternating voltage into a direct one, said conversion stage being placed between the input stage and the output stage,
- a control unit adapted to control operation of the conversion stage.

The conversion stage comprises a first multilevel AC-DC converter, said first multilevel converter comprising a plurality of sub-modules (SMs) connected with each other to define conversion levels of the converter, at least one of said sub-modules comprising an energy storage device and/or an energy source connected to an inverter.

The control unit is adapted to connect the energy storage device and/or the energy source to said output stage for releasing energy stored in said storage device and/or energy provided by said energy source respectively.

The recharging system preferably is placed into a charging station, that is a structure having an input for the connection to an electric distribution grid (for example the national electric grid that in Italy supplies energy at 230V @ 50HZ to appliances) and an electric socket to which a recharging plug of an electric vehicle can be connected. The shape and the dimensions of such recharging station can be of different type, and it is possible to provide a ground mount installation and/or a wall mount installation (for example for installation in private boxes). In order to allow it to be used in public places, such as parking lots and filling stations, the charging station can comprise a user interface (e.g. comprising a touch screen) and means for calculating the payment of the current supplied to the vehicle (e.g. means measuring the Amperes supplied to the vehicle and means calculating a charge for the supplied current).

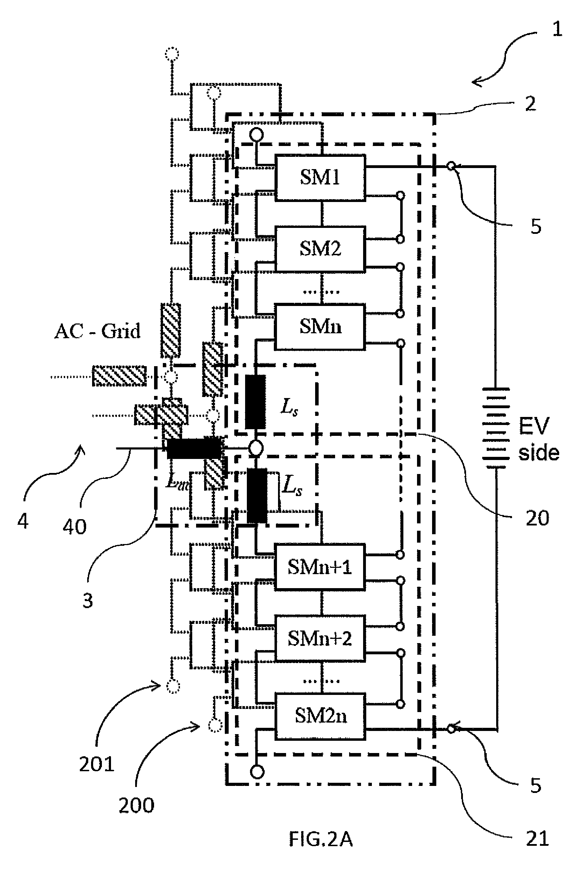

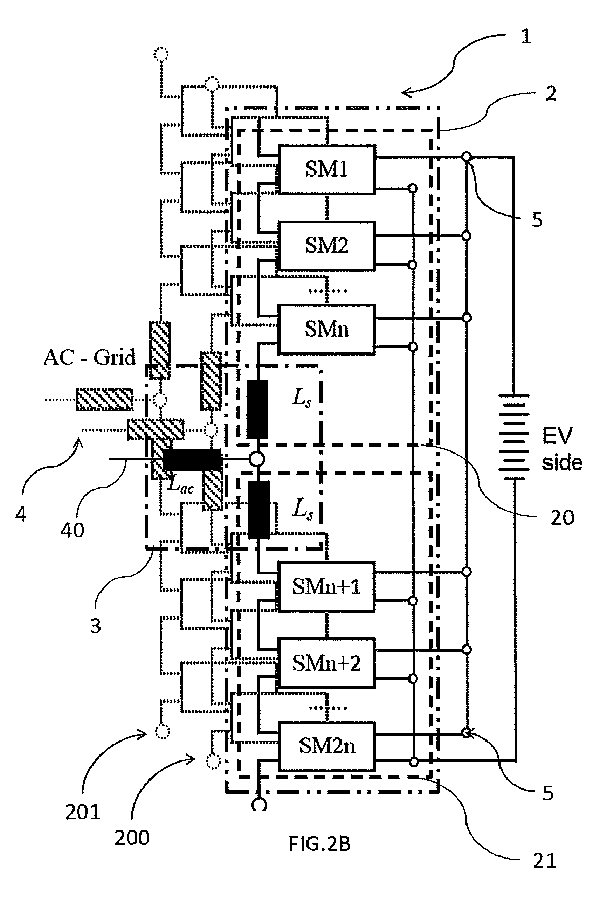

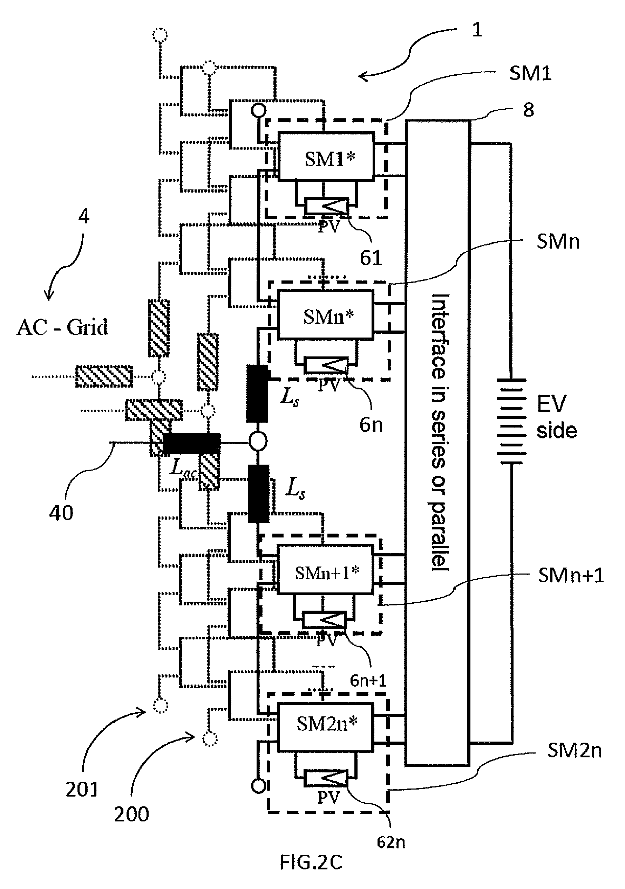

Figs. 2a, 2b and 2c show three solutions of a single-phase recharging system 1, that is a system charging the battery of an electric vehicle (EV) by means of a converter supplied by a phase of the national electric grid.

In the following figures, the national electric grid is represented as a three-phase alternating grid, obviously the number of phases can change and it is not limitative of the present invention. The system, as it will be show, can operate by drawing current from a single-phase AC grid or a multi-phase AC grid with any number N of phases. Similarly the AC grid can be replaced by any AC source from which energy is drawn for charging the electric vehicles EVs.

The system 1 comprises a multilevel AC/DC converter 2 connected, by a filter bank 3 (generally represented by a Lac inductance and in this case corresponding to the input stage of the recharging system) to a phase 40 of an AC electric grid 4.

The multilevel converter 2 then has a pair of output terminals 5 that coincide with the output stage of the system of figure 2a-2c.

The electric vehicle EV, represented as a battery pack, is connected to terminals 5 of the converter 2 in order to be recharged.

The multilevel converter 2 is composed of two symmetric blocks 20 and 21 that, properly controlled, operate for rectifying the two loops (positive and negative one) of the AC alternating voltage received at input.

Each block 20 and 21 comprises an input impedance $L_s$ necessary to filter the input signal, and a series of sub-modules SMs connected in cascade. The sub-modules SMs have both an AC alternating current side, for the direct connection to the grid, and a

EV side to the electric vehicle, for the direct connection to the electric vehicle.

In a known manner, the sub-modules SMs of the multilevel converter comprise a AC/DC converter, for example a H bridge (*H-bridge* or *full-bridge)* or a half-H bridge *(half-bridge),* which is driven by control electronics (for example a DSP, Digital Signal Processor) of the recharging system, not shown in the figures.

By controlling in a manner known per sé the sub-modules SMs, the alternating voltage of the grid, as input to the converter, is converted in a number s of potential drops $V_{dc}$ which are at the output terminals of each sub-module SMs.

In the example of figure 2a, 2b and 2c there are provided 2*n* sub-modules SMs, therefore s is equal to 2*n*, and the multilevel converter is a *m*=2s+1 multilevel converter.

The sub-modules SMs therefore define the conversion level of the multilevel converter. The potential drops $V_{dc}$ at the output terminals of the sub-modules SMs can be summed by connecting in series the outputs of the sub-modules SMs, such as shown in fig.2a, such to charge the electric vehicle with a voltage higher that that at the ends of the individual sub-modules SMs.

This solution allows the sub-modules to be made with switching block components with voltage reduced with respect to the overall voltage of the EV side, but all of them being passed through by a maximum charging/ discharging current for the battery pack.

In the non-limitative example of figure 2a, and in the following ones, the electric distribution grid is a three-phase grid. In the example of figure 2a there are shown, with dashed lines, two multilevel converters (200 and 201) of the type described above, with modules SMs and input impedances Ls and Lac. The system of figure 2a therefore has three multilevel converters each one connected to a respective phase of the distribution grid and each one equipped with its own output terminals 5 for powering an electric vehicle EV.

On the contrary Fig.2b shows a preferred solution for a connection in parallel of the sub-modules SMs on the EV side: this solution could be more suitable for applications of electric road traction since, due to the reduced values of the voltages of the blocks required to the switching components, it is possible to have the possibility of evenly dividing the maximum charging/discharging current among the several sub-modules without the risk of damages.

At least one of the sub-modules SMs of the circuits of figure 2a and 2b comprises an energy source, additional with respect to the alternating AC grid 4 at input and/or an energy storage device. Such device, for example can be composed of a capacitor assembly, particularly supercaps, connected in series, or of a buffer battery of the electrochemical type or of lithium-ion batteries, fuel cells or of any type of storage cell or a panel or a series of photovoltaic panels (PV).

The energy source, as it will be better explained below, with reference to figures 10 to 13 where different alternative embodiments of the sub-modules SMs are described, can be a AC or DC source and preferably, but not necessarily, it is a renewable energy source.

This aspect is pointed out in fig. 2c, where the possibility of integrating the sub-modules SMs with an external source is pointed out in order to integrate and support the energy demand to be observed in the converter. To this end, the sub-modules SMs are denoted as an assembly of two blocks: a SMs* block comprising a AC/DC converter and a source.

In the example of figure 2c each sub-module SMs is provided with a respective external source $6_k$, k being an integer ranging from 1 and s, placed on one side of the sub-module such to denote a "source side" in addition to AC and DC sides typical of the sub-modules of a multilevel AC/DC converter. Obviously the positioning the energy source $6_k$ in figure 2c is only for simplicity and illustrative purposes, the real positioning of such source being better shown in figures 10 to 13 where different alternative embodiments of the sub-modules SMs are shown.

However the example of figure 2c makes it very clear a preferred and advantageous aspect of the invention, that is the modularity of the recharging system. In fig.2c each module SMs is represented as an assembly composed of a module SMs* and of an energy source connected thereto. This allows, depending on energy needs, to integrate or not one or more sub-modules of the multilevel converter. Particularly in one preferred and advantageous embodiment, one or more (and preferably all) the sub-modules of the multilevel converter are arranged with terminals to which an external energy source can be rapidly connected.

This solution, with a suitable control, offers good opportunities in managing energy flows by promoting buffering characteristics directed to a MMC configuration in order to contain peaks of power demand to the grid.

In the system of figure 2c the modules SMs are connected, on the DC side to an interface circuit 8 that, dynamically, allows DC outputs of the sub-modules SMs to be connected in series or in parallel. Thus under the control of the control electronics, it is possible to connect in series or in parallel the outputs in order to meet the recharging needs of the electric vehicle.

Information about recharging needs of the electric vehicle, for example can be provided to the control unit of the recharging system through a user interface or another manner.

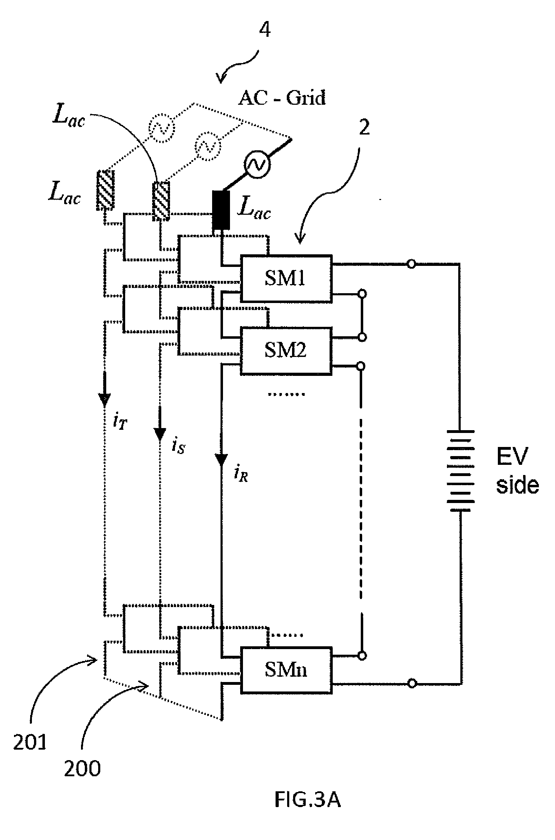

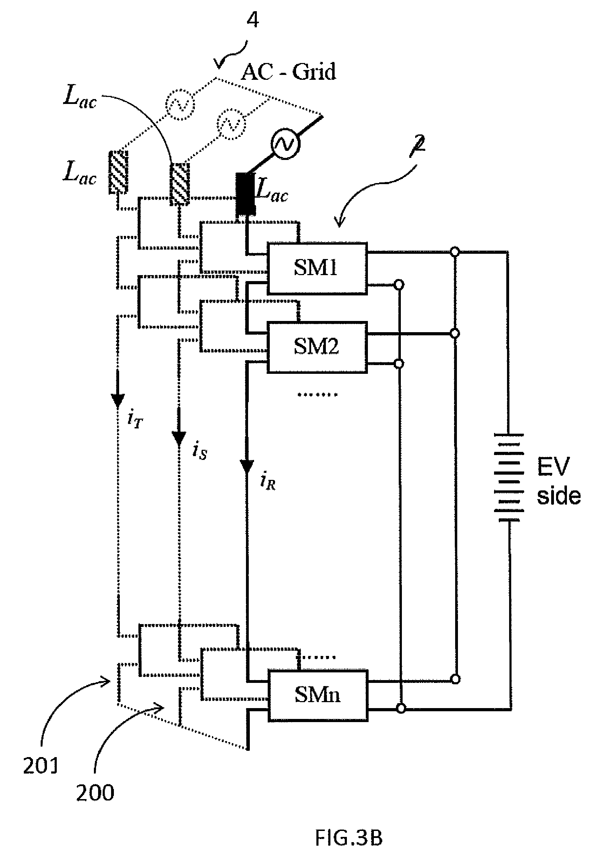

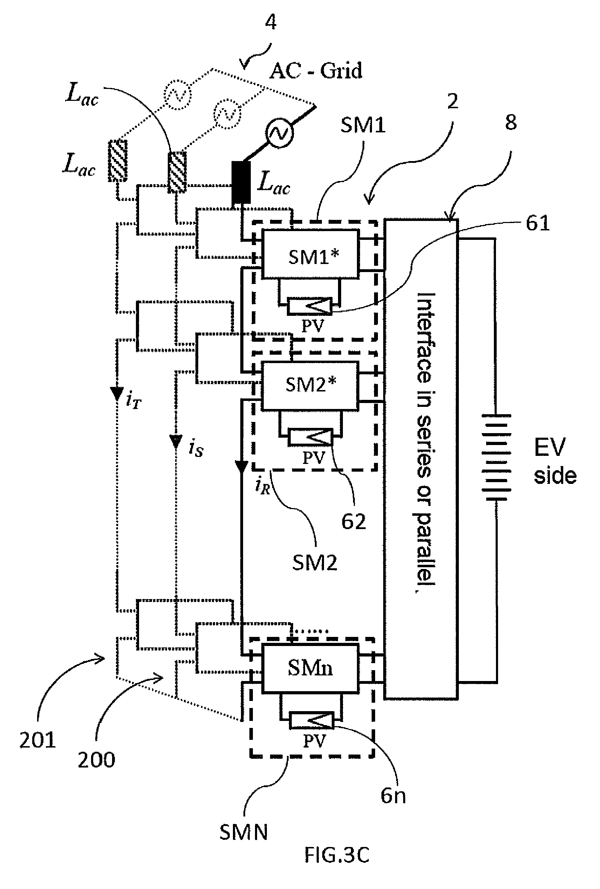

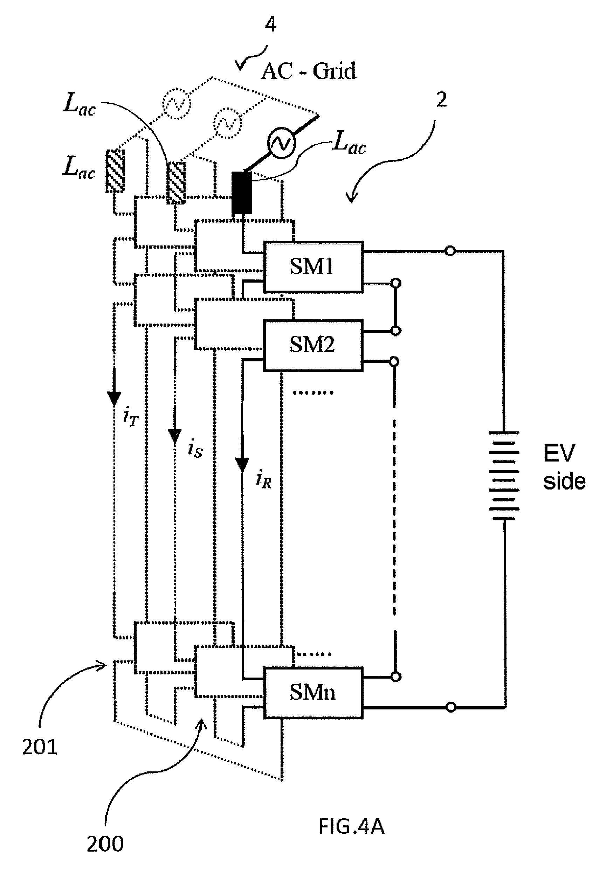

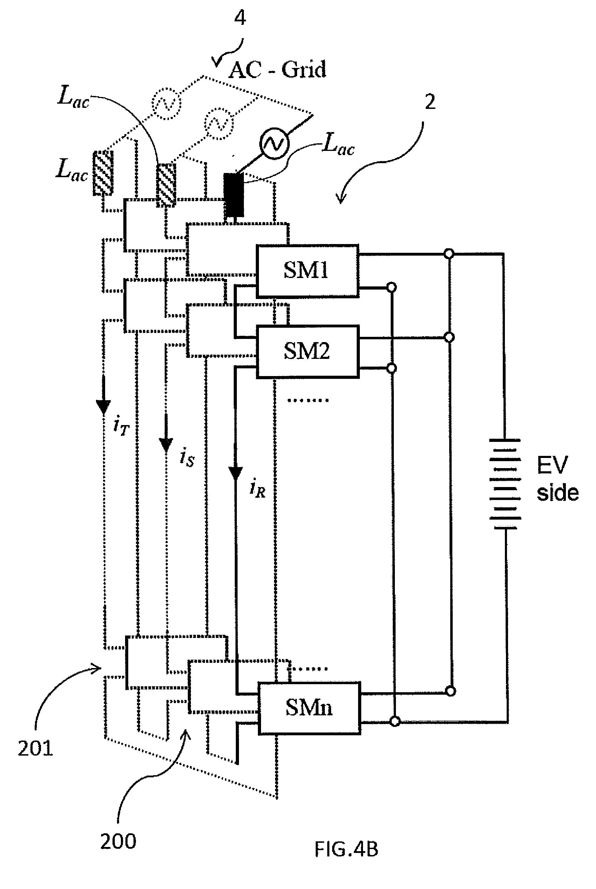

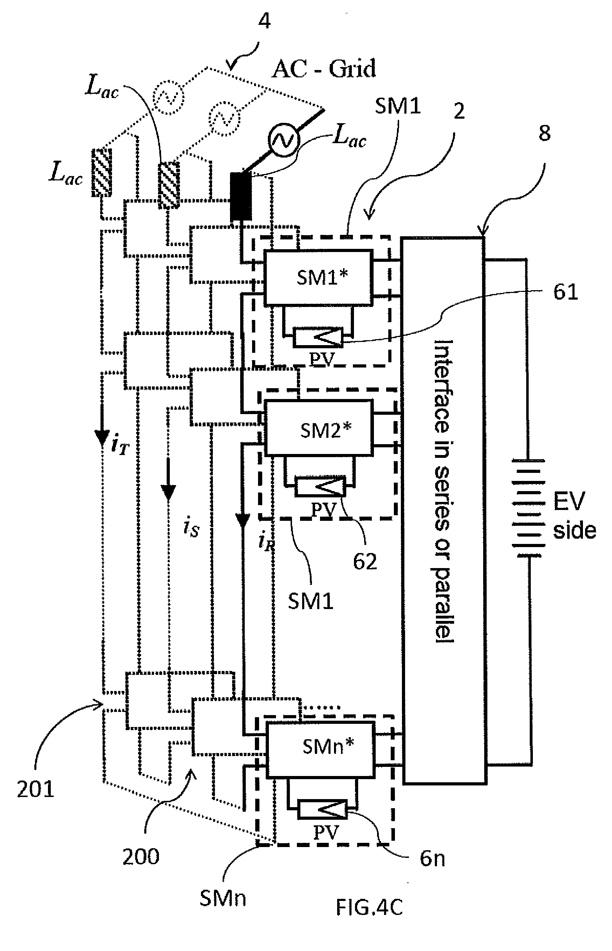

Figures 3a,3b,3c,4a,4b,4c show advantageous embodiments reducing possible unbalances on the grid. Topological configurations shown in these figures fall within the cascaded H-Bridge category (called as CHB).

Unlike examples of figure 2, where each phase of the AC distribution grid supplies a respective multilevel converter independently from the other phases, in the examples of figure 3 and 4 the grid phases are connected with each other and therefore they exchange electric power.

In Figure 3 the recharging system comprises a plurality of "low and medium voltage modules" connected in a star configuration, wherein each leg of the star is connected to a phase of the AC grid and it has an inductance Lac and a low voltage module; each one of such cells holds a multilevel converter with sub-modules SMs (using H bridges, or half-H bridges) in cascade and connected in series (fig.3a) or in parallel (fig.3b) on the DC side. Each one of such cell corresponds, therefore, substantially to the multilevel converter 2 described above with reference to figure 2 and it has a DC bus (for the connection of the electric vehicle to be recharged) with a relevant dedicated capacitor (DC bus capacitor).

As in figure 2, figure 3c points out the possibility of connecting in series or in parallel the DC outputs of the modules SMs and of connecting one or more energy sources to the different modules.

In Figure 4 the "low voltage cells" are connected to the phases of the distribution grid such to form a triangle configuration (or delta configuration). Similarly to what shown in figures 2 and 3, figure 4a shows the sub-modules SMs connected in series on the DC side, while figure 4b shows the same modules with DC output connected in parallel. Figure 4c points out the possibility of connecting energy sources, for example photovoltaic modules, to sub-modules.

In a preferred embodiment the recharging system is arranged with a plurality of electric sockets to which relevant plugs of a plurality of electric vehicles to be recharged can be connected. This is possible since to each one of the multilevel converters shown in figures 2 to 4 it is possible to connect, on the DC side, an output stage comprising (or coinciding with) a pair of terminals to which a respective electric vehicle EV can be connected. Thus the solutions shown in figures 2 to 4 and provided with three multilevel converters (one for each phase) can power up to three electric vehicles.

As it will be seen in the examples below, the number of output terminals to which the electric vehicles are connected does not depend on the number of the phases of the AC distribution grid.

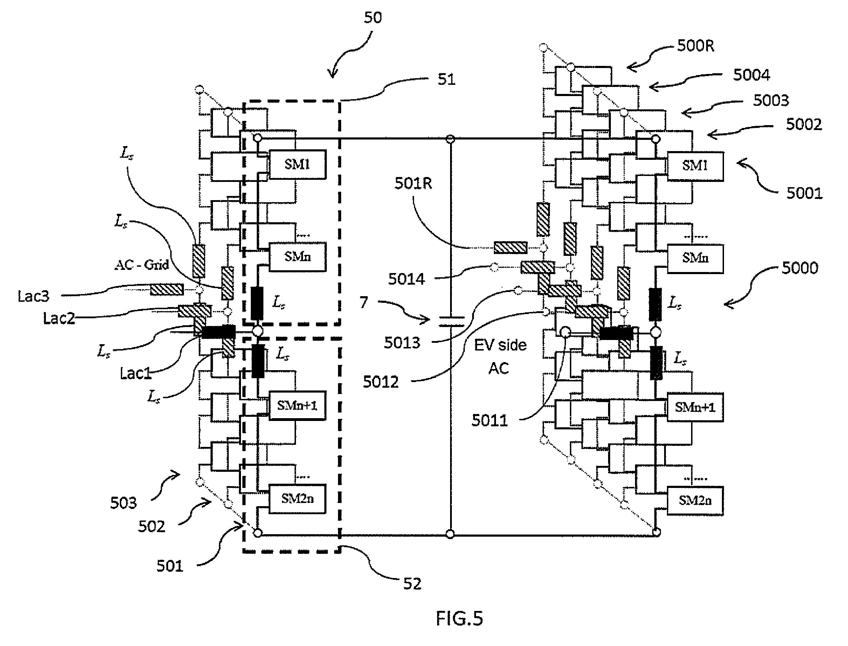

Fig.5 shows a recharging system allowing a number R of electric vehicles, R being any integer higher than 1, to be recharged with alternating current AC.

The recharging system exploits an indirect AC-DC-AC conversion by modular multilevel converters.

In the example of figure 5 the first conversion stage is composed of a three-phase modular multilevel converter 50 comprising three legs 501, 502, and 503 connected at input by a respective impedance Lac1, Lac2 and Lac3, to the three phases f1, f2 and f3 of the AC distribution electric grid.

The three legs 501, 502 and 503 are connected in parallel and each individual leg is composed of an upper arm 51 and a lower arm 52.

The upper arm and the lower arm respectively consist of any number "n" of sub-modules SMs in cascade wherein the individual module comprises a half-H bridge inverter, for example of the type shown in Fig.11a, 11b and 11c, or full-H bridge such as for example shown in figures Fig.11d, 11e and 11f.

The second conversion stage of the recharging system of figure 5 comprises a multi-phase modular multilevel converter generally denoted by reference 5000. The configuration of the modular multilevel converter is substantially the same as that of the first conversion stage, with a plurality of conversion legs 5001, 5002, 5003, 5004...5000R connected in parallel and comprising an upper and a lower arm in turn comprising sub-modules SMs connected in cascade and a resistor Ls.

Each individual leg 500k (with k ranging from 1 to R) is provided with a AC alternating current output 501k (with k ranging from 1 to R) to which an electric vehicle can be connected.

Since the electric vehicle can require one or more phases for the recharging, in one embodiment a plurality of outputs 501k of the modular multilevel converter 5000 are received into a single electric socket where an electric plug of the electric vehicle to be charged can be inserted. In this embodiment, the control electronics of the recharging system is configured such to control the converters (e.g. H bridge or half-H bridge) present in the sub-modules SMs of the individual legs 500k such that at the outputs 501k there are provided sinusoidal signals which are suitably out-of-phase.

Preferably, such electric plug comprises also a ground line.

In the example of figure 5 the first and second conversion stages are connected by a AC line provided with a capacitor 7 which is connected in parallel to the AC sides of the two multilevel converters 50 and 5000. Such capacitor acts as a filter and it can be possibly replaced by another element or circuit able to filter the current signals transferred between the two multilevel converters 50 and 5000; particularly such filter is dimensioned for cutting frequencies higher than those of the alternating voltage distributed by the distribution electric grid (in Italy e.g. 50 Hz).

Even if not shown in figure 5, each sub-module SMs of the legs of the multilevel converters 50 and 5000 can comprise an energy storage device and/or energy source, for example such as shown in figures 10 or 13. The energy storage device and/or energy source are preferably connected to the DC side of the sub-modules SMs.

The AC/DC conversion performed by each individual sub-module SMs, therefore allows the energy storage device to be charged and/ or energy to be drawn therefrom or from the energy source, under the control of the control electronics of the recharging system, such to implement several strategies for recharging the electric vehicle with no stress for the electric distribution grid.

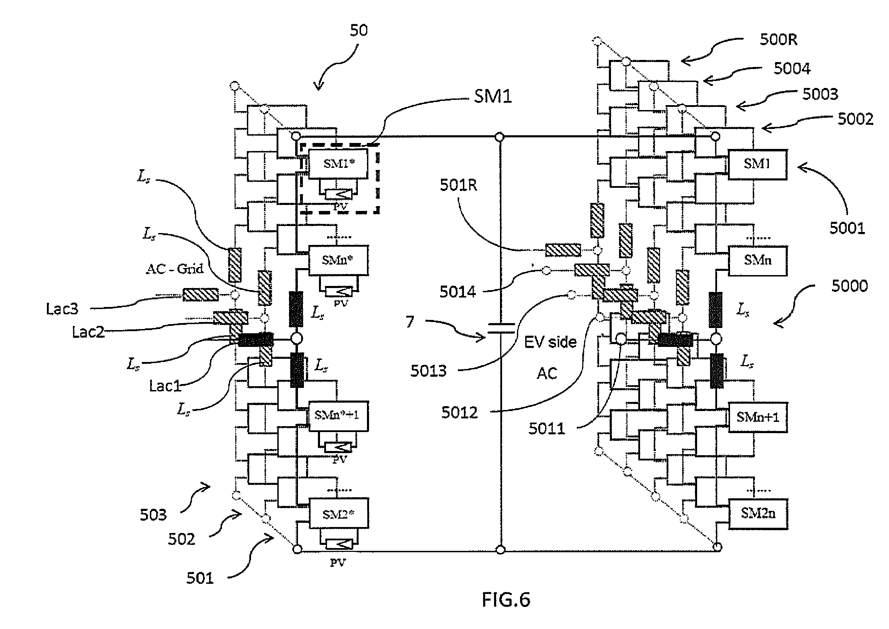

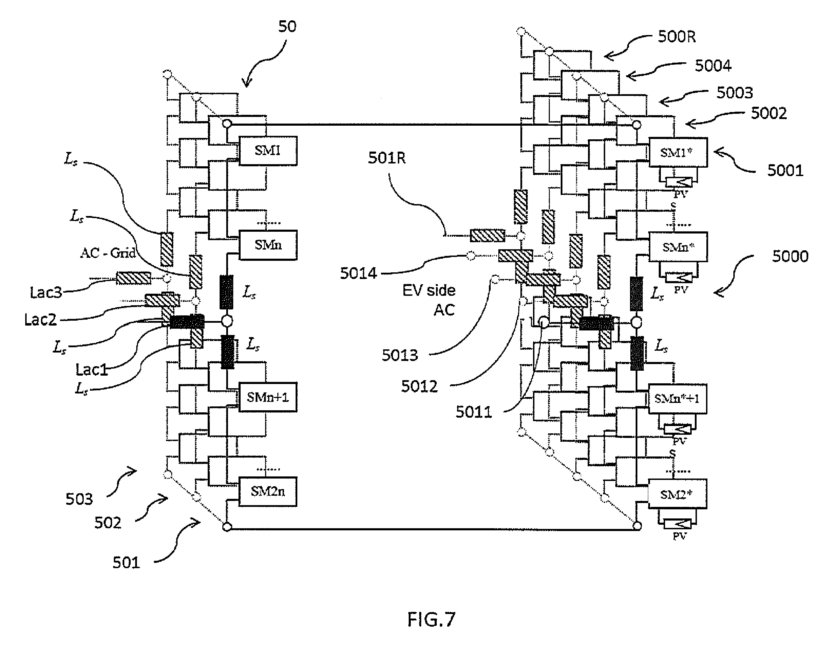

As said above, it is possible to provide energy sources to be integrated into one or more or all the sub-modules SMs of the multilevel converter used by the recharging system. This is pointed out in figures 6 and 7.

Fig.6 shows an AC alternating current charging station with indirect AC-DC-AC conversion in MMC configuration integrated with photovoltaic modules PV on the first conversion stage, that is on the AC alternating current side of the grid.

The first conversion stage consists in an active three-phase rectifier using a multilevel modular topology wherein each individual leg is composed of an upper and a lower arm. The upper and lower arm are any number "n" of modules in cascade respectively, wherein the individual module comprises, preferably, a half-H bridge circuit such as that shown in Fig.10b.

The second conversion stage is the same shown and described in fig.5.

FIG.7 shows the charging station based on an indirect AC-DC-AC conversion in MMC configuration with photovoltaic modules PV on the alternating current side of the electric vehicle EV.

The first conversion stage is the same shown in Fig.5, while the second conversion stage consists in a DC-AC multi-phase modular multilevel converter, wherein each individual leg is composed of an upper arm and a lower arm.

The output for the connection of the AC alternating current electric vehicle EV is connected to a median point of the leg.

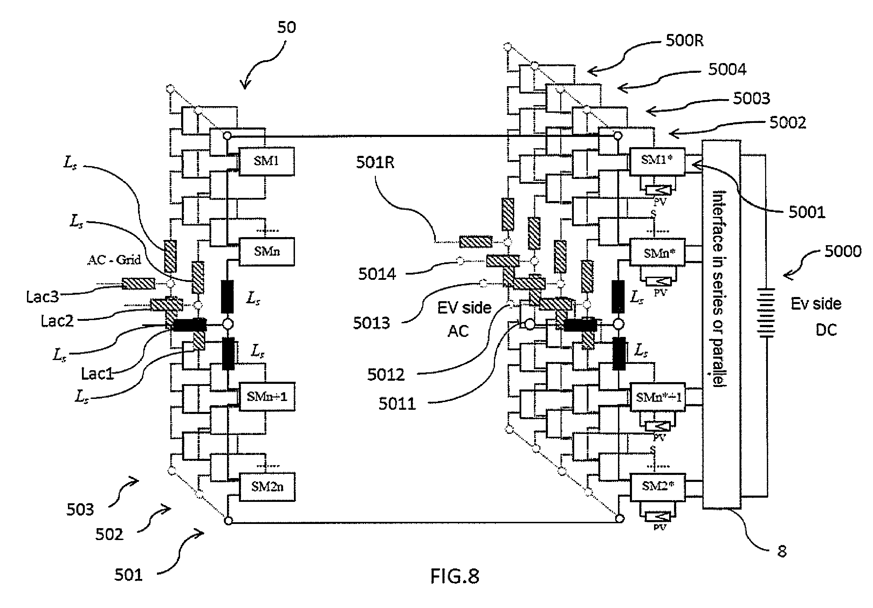

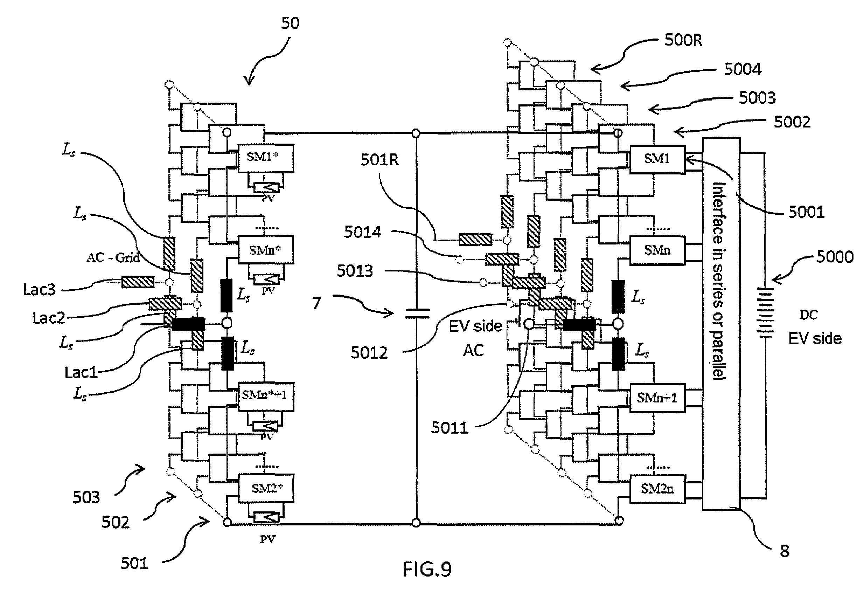

The upper and lower arm respectively are a number "n" of modules in cascade, wherein each individual module preferably is composed of a half-H bridge circuit integrated with a photovoltaic module PV, for example such as shown in Fig.10b. Figures 8 and 9 show two embodiments of a hybrid recharging system for electric vehicles. The hybrid recharging system comprises an AC output and a DC output for recharging electric vehicles in direct or alternating current.

In the example of Fig.8 there is shown a hybrid recharging system in AC alternating current and DC direct current, on the basis of an indirect AC-DC-AC conversion, in MMC configuration integrated with photovoltaic modules on the AC side of the electric vehicle.

The first conversion stage is the same shown in Fig.5.

The second conversion stage is a multi-phase DC-AC modular multilevel converter wherein each individual leg is composed of an upper arm and a lower arm.

The upper and lower arm respectively comprise any number "n" of modules in cascade, wherein the individual sub-module SMs comprises a H bridge circuit or a half-H bridge circuit. Such sub-module preferably comprises:

- a conversion circuit isolated on the side of the electric vehicle EV, for example a conversion circuit of the type shown in figures 11a, 11b, 11c,
- an energy storage device and
- an energy source, particularly a photovoltaic module PV, which is connected to the DC side of the conversion circuit by a DC boost, for example such as shown in FIG.14b.

By means of the interface circuit 8, each sub-module can be connected in series or in parallel on the side of the electric vehicle EV such to reach the power required by the vehicle.

Fig.9 shows an AC and DC hybrid recharging system integrated with photovoltaic modules PV on the alternating current side of the grid.

The configuration is similar to the topology in fig.8, but in this case, the integration of the photovoltaic module PV in the sub-modules SMs is made in the first conversion stage, that is on the AC side of the electric distribution grid.

Figures 10 to 13 show different embodiments of the sub-modules SMs.

Figure 10a shows a sub-module SMs with a non-isolated half-H bridge AC/DC active rectifier 100 and one element 101 (that can be a DC energy source or an energy storage device) connected in parallel to the DC side of the active rectifier.

In a manner known per se, the half-H bridge comprises a pair of switches (T1 and T2) and a pair of free wheeling diodes (D1 and D2). By properly controlling the opening and closure of the switches it is possible to convert a direct voltage into a waveform that is near a sinusoidal waveform and vice versa. The half-H bridge and the H bridge however are circuits known per se and therefore it is not necessary to go further in details of their operation.

In the solution of FIG. 10a the switches of the half-H bridge are made with a MOSFET or another solid state switch (SSS).

When conducting, the MOSFETs, or any other SSSs, have a very low constant resistance known as "on" resistance (RDS(on)), that depends on some parameters of the MOSFET (such as substrate doping) and it can start from 10 mΩ or even less. The voltage drop through the transistor therefore is very low, that leads to a reduction in the power loss and to an efficiency increase with respect to H bridge circuits or half-H bridge circuits that use a relay or other mechanical switches.

In a preferred embodiment, the control electronics of the recharging system usually uses comparators for detecting the AC voltage at input to the modular multilevel converter and it controls the transistors at the right moment in order to allow the current to flow in the proper direction.

The use of an active rectifier for implementing the AC/DC conversion allows the design to undergo further improvements (with a higher complexity) to obtain an active correction of the power factor, which forces the waveform of the AC alternating current source (that is the voltage supplied by the electric distribution grid) to follow the waveform of the voltage, by removing reactive currents and allowing the system as a whole to reach a greater efficiency.

Fig.10b shows a sub-module SMs with a half-H bridge rectifier 100, an energy storage device 102 being connected to its DC side (in the figure it is represented by a buffer battery). The sub-module of figure 10b further comprises a photovoltaic module 103 that provides energy to the sub-module through a direct current boost 104 that brings the voltage of the photovoltaic module 103 to the value to the DC voltage at output from the sub-module SMs, that is the voltage drawn on the DC side of the half-H bridge. The boost 104 therefore is a power converter from DC direct current to DC direct current with an output voltage higher than its input voltage.

In the example of figure 10b, the boost 104 comprises a transistor, in the example a BJT, 1041 in the ground emitter configuration. The collector of the BJT 1041 is connected to the photovoltaic module through an inductor 1040 and to a terminal of the buffer battery 102 through a diode 1042 that prevents current from the battery to return to the photovoltaic module 103. The boost 104 then comprises, at output, a capacitor 1043 placed in parallel to the buffer battery 102 and to the DC side of the half-H bridge 100. The energy storage in the buffer battery 102 can be supplied both by alternating current AC coming from the AC side of the half-H bridge 100, and from the photovoltaic panel 103 connected to the Boost 104.

The sub-module of figure 10b therefore is a type of Switched-Mode Power Supply (SMPS) containing at least two semiconductor switches (a diode and a transistor) and at least one energy storage element, a capacitor, an inductor, or both of them in combination.

Figures 10c and 10d show two embodiments of a module SMs that, unlike those of figure 10a and 10b, use a non-isolated AC/DC H bridge rectifier 105.

FIG.11 shows (figs. 11a to 11f) different embodiments of isolated sub-modules SMs, that is provided with a transformer that isolates the output on the EV side of the sub-module from the high-voltage AC input.

Figures 11a, 11b and 11c show solutions wherein the AC/DC conversion is performed by a half-H bridge 100, while in figures 11d, 11e and 11f the conversion is obtained by a H bridge 105. The AC/DC conversion therefore is obtained by means of a non-isolated half-H bridge or non-isolated H bridge active rectifier that converts a AC alternating current source into a direct voltage $V_{DC}^*$ for storing energy in a buffer battery 102.

The sub-modules of figures 11a-11f are adapted for the coupling to a DC output stage of the recharging system, therefore they are adapted for being used in modular multilevel converters of figures 2, 3 and 4 and in modular multilevel converters 5000 used in the second conversion stage of the recharging systems of figures 8 and 9. Just for allowing the coupling to the DC output of the recharging system, the sub-modules of figure 11 are each provided with a DC-DC converter that allows the output voltage to be adjusted to a desired value.

Particularly, in the embodiments of figures 11a-11f the DC-DC converters are electronic switched-mode converters; switching being electronically controlled, for example by a PWM control.

Preferably, DC/DC converters used in the sub-modules convert a DC voltage from a first level to another one, by temporarily storing energy at input and then releasing it at output with a different voltage. The storage of such energy can occur in magnetic field storage components (inductors, transformers) or electric field storage components (capacitors). This conversion method is more efficient as regards energy (often 75% to 98%) than linear voltage regulation (which dissipates energy as unwanted heat).

In the example of fig.11 the energy stored in the "battery buffer" is transferred through the transformer 109 that guarantees the insulation between the AC side and the DC side of the sub-module SMs.

Examples of bidirectional isolated DC-DC converters to be used in the sub-modules, are full-H bridge DC-DC converters 106 (figures 11a and 11d), half-H bridge DC-DC converters 108 (figures 11b and 11e) or push-pull circuit DC-DC converters 107 (figures 11c and 11f) or variants thereof.

The isolated DC-DC converter 107 with push-pull circuit comprises a H bridge converter 1070 whose AC output is connected to the primary of a transformer 109. The secondary of a transformer is connected to a pair of switches with free-wheeling diode 1071 that rectify the alternating voltage provided on the secondary. In the example of figure 11b and 11e the EV output of the sub-module of the secondary is tapped in a central point of the secondary.

The isolated half-H bridge DC-DC converter 108 comprises a H bridge converters 1081 and a half-H bridge converter 1080 connected on the AC side through a transformer 109.

By suitably controlling the opening and closure of the switches present in the DC-DC converters 106, 707 and 108 it is possible to obtain the desired voltage conversion and thus to regulate the DC voltage present on the EV side of the sub-module.

Fig.12a and 12b show isolated sub-modules on the side of the electric vehicle EV that, as for sub-modules of Fig.11, comprise a DC-DC converter for adjusting the output direct voltage to a desired value for recharging the electric vehicle.

Unlike solutions of Fig.11 the sub-modules of Fig.12 use a DC-DC isolated multi-phase converter 110 on the electric vehicle EV side. The DC-DC isolated multi-phase converter 110 comprises a transformer 111 with a number of windings equal to the number of phases desired to be generated. For each phase the converter comprises at least a pair of half-H bridges connected to one winding of the transformer 111.

This arrangement allows the dimensions of the transformer to be reduced.

The sub-modules SMs of Fig. 11 and 12 comprise an energy storage device, but no energy source.

The modularity of the recharging system of the present invention however allows also the sub-modules of Fig. 11 and 12 to be integrated with energy sources, for example photovoltaic modules. The integration can occur by connecting to the ends of the battery 102 or to the EV side of the modules of Fig.11 and 12 one module of the type shown in Fig. 14, described below. When one of the modules of Fig.14 is connected to the EV side of the sub-modules of Fig.11 and 12, the DC-DC converter of the sub-module can be used also for adapting the voltage of the energy source to that of the battery during the recharging step thereof.

FIG. 13 shows further embodiments of the sub-modules SMs that comprise both an energy storage device and an energy source.

These sub-modules are preferably used for AC/DC conversion stages (active rectifiers) shown and described for Figs. 5-9.

FIG.13a and FIG.13b comprise a half-H bridge 100 and a H bridge 105 respectively on the AC continuous current side of the sub-module and use a multi-phase DC-DC converter 113 for interfacing to a DC direct current source 114 and to regulate the energy storage in the storage device 102. The multi-phase DC-DC converter of figure 13 has three phases, on each of them an inductor 115 is provided.

This arrangement allows the dimensions of the mutual inductance to be reduced.

FIG.13c and FIG.13d comprise a half-H bridge 100 and a H bridge 105 respectively on the AC continuous current side and use a multi-phase DC-DC converter 116 for interfacing to AC alternating current sources 117.

FIG.14a, 14b show two possible topologies of modules for the integration of energy generating sources and/or energy storage devices in sub-modules SMs of the recharging system.

In Fig.14a and 14b the energy sources are represented by a photovoltaic module PV, such example is only for illustrative purposes and obviously other type of sources can be used instead of photovoltaic ones.

In FIG.14a the photovoltaic module PV 140 and the energy storage device 141 provide a voltage lower than that of the DC bus to which they have to be connected. For this reason the module of Fig.14a comprises a Boost converter 145 (e.g. of the type described in Fig.10b) for the connection of the photovoltaic module 140 to the output 142 of the module of fig.14a.

The energy storage device is connected to a "Buck Boost" converter 143 in order to have a bidirectional transfer of energy, such that it can be sent to the energy storage device (Buck) or it can be brawn from the energy storage device (Boost).

The output voltage of the "Buck Boost" converter is of the same polarity of the input, (drawn from the battery 141), and it can be lower or higher than the input. Such a noninverting buck-boost converter may use a single inductor which is used for both the buck inductor and the boost inductor.

The Buck Boost converter can be made also by using multi-phase topologies.

Unlike the example of figure 14a, in the example of figure 14b the energy storage device 144 is connected in parallel to the output 142 of the module.

From the above it is clear that the recharging system for electric vehicles achieves the set objects by means of a highly efficient and compact structure enabling fast and very fast recharging with a minimum impact on the electric distribution grid.

It is also clear that an expert in recharging systems, once learnt the teaching of the present invention, as it appears from the description and the claims, can make many changes to the recharging system described above, without departing from the protection scope of the present patent as it appears in the annexed claims. Particularly, it is clear that circuit blocks described with reference to the different figures can be grouped and integrated in a different manner.

It is also clear that, although the invention has been described with reference to a preferred and advantageous application, the one of recharging systems for electric vehicles, the recharging system described above can be used also for other applications, particularly for recharging other electronic devices and apparatuses. Only by way of example, with reference to figures 1-9, in addition to the possibility of connecting in series or in parallel the EV side of the sub-modules on the same phase, it is possible to connect in series or in parallel sub-modules of different phases as shown in fig.15a (showing a parallel connection of the sub-modules SMs of different phases) and 15b (showing a series connection of the sub-modules SMs of different phases). That is to say, the outputs of the general sub-modules SMs, on the EV side, can also be arranged in series or in parallel on different phases. This allows a symmetry condition to be automatically provided even in case of several vehicles under recharging.

**Claims**

1. Recharging system (1) for electric vehicles (EVs) comprising

- an input stage (3) for connection to an alternating current electric distribution grid (4),
- an output stage (5) for connection to an electric vehicle (EV),
- a conversion stage (2) for converting an alternating voltage into a direct one, said conversion stage (2) being placed between the input stage (3) and the output stage (5),
- a control unit adapted to control operation of the conversion stage (2), **characterized in that** the conversion stage (2) comprises a first multilevel AC-DC converter, said first multilevel converter comprising a plurality of sub-modules (SMs) connected with each other to define conversion levels of the converter, at least one of said sub-modules comprising an energy storage device (102) and/or an energy source (PV) connected to an inverter, and **in that** the control unit is adapted to connect the energy storage device (102) and/or the energy source (PV) to said output stage (5) for releasing energy stored in said storage device (102) and/or energy provided by said energy source (PV) respectively.

2. System according to claim 1, wherein the energy source is a direct current source, in particular it comprises a photovoltaic module (PV).

3. System according to claim 1, wherein the energy source is an alternating current source.

4. System according to claim 1 or 2 or 3, wherein the sub-modules (SMs) are connected in cascade with the DC outputs connected in series.

5. System according to claim 1 or 2 or 3, wherein the sub-modules (SMs) are connected in cascade with the DC outputs connected in parallel.

6. System according to claim 1 or 2 or 3, wherein the sub-modules (SMs) are connected in cascade with the DC outputs connected to an interface circuit (8) configured for dynamically connecting in series or in parallel the outputs of the sub-modules (SMs).

7. System according to claim 5 or 6, wherein the electric energy distribution grid is a multi-phase grid, and wherein said first multilevel converter is connected to a first phase and wherein the conversion stage comprises, for each further phase of the electric distribution grid, at least one further multilevel converter equal to said first converter.

**8.** System according to claim 7, wherein the electric energy distribution grid is a three-phase grid, and wherein the multilevel converters are connected in star configuration to the alternating current electric distribution grid.

**9.** System according to claim 7, wherein the electric energy distribution grid is a three-phase grid, and wherein the multilevel converters are connected in delta configuration to the alternating current electric distribution grid.

**10.** System according to any of the preceding claims, wherein the conversion stage comprises an output multilevel AC-DC converter connected in parallel to the first multilevel converter, wherein the first multilevel converter (50) is connected to said input stage (3) and wherein said output multilevel converter (5000) is connected to said output stage (5).

**11.** System according to claim 10, wherein said output stage comprises an alternating current output in order to allow electric vehicles to be recharged with alternating current, and wherein said output multilevel converter (5000) comprises a plurality of legs (500k) connected in parallel to said first multilevel converter (50), each one of said legs (500k) comprising a multilevel converter with a respective alternating current output (501k), and wherein the control unit is adapted such to control the multilevel converters of said plurality of legs (500k), such that at least two alternating current outputs of said plurality of legs are out of phase.

**12.** System according to claim 11, wherein a plurality of outputs of the output multilevel converter (5000) are housed in a single electric socket wherein an electric plug of an electric vehicle to be recharged can be inserted, and wherein the control electronics of the recharging system is configured such to control the converters, e.g. H bridge or half-H bridge, present in the sub-modules (SMs) of the individual legs (500k), such that at the outputs (501k) present in the socket there are sinusoidal signals out of phase by the same angle.

**13.** System according to claim 10 or 11 or 12, further comprising a capacitor placed in parallel to said first multilevel converter ad to said output multilevel converter.

**14.** System according to claim 10 or 11 or 12 or 13, wherein the output stage comprises a direct current output in order to allow electric vehicles to be recharged with direct current, said direct current output being connected to the DC side of said output multilevel converter.

**15.** System according to any claims 10 to 14, wherein said output multilevel converter comprises a plurality of sub-modules (SMs) connected with each other to define conversion levels of the output converter, at least one of said sub-modules comprising a respective energy storage device and/or a direct current energy source, in particular a photovoltaic panel (PV), connected to an inverter.

**16.** Charging station for electric vehicles, comprising a box-like body adapted to house a recharging system according to any of the preceding claims, an electric socket connected to the output stage of the recharging system for receiving a plug of an electric vehicle, and means, in particular terminals, for connecting the input stage of the recharging system to an alternating current electric distribution grid.

FIG.1

FIG.2A

FIG.2B

FIG.2C

FIG.3A

FIG.3B

FIG.3C

FIG.4A

FIG.4B

FIG.4C

FIG.5

FIG.6

FIG.7

FIG.8

EP 2 815 913 A1

FIG.9

FIG.10A

FIG.10B

FIG.10C

FIG.10D

FIG.11A

FIG.11B

FIG.11C

FIG.11D

EP 2 815 913 A1

FIG.11E

FIG.11F

Multi-phase Isolated Dc/Dc

Half bridge

Buffer Battery

HF

EV side

AC side

110

102

111

100

**FIG.12A**

Multi-phase Isolated Dc/Dc

H bridge

Buffer Battery

HF

EV side

AC side

110

102

111

105

**FIG.12B**

FIG.13A

FIG.13B

FIG.13C

FIG.13D

FIG.14A

FIG.14B

FIG.15B

FIG.15A

| | Europäisches Patentamt |
|---|---|
| | European Patent Office |
| | Office européen des brevets |

# EUROPEAN SEARCH REPORT

**Application Number**

EP 14 17 2484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2011 017597 A1 (SIEMENS AG [DE]) 31 October 2012 (2012-10-31) | 1 | INV. B60L11/18 |
| Y | * paragraphs [0002], [0040] - [0059]; | 2,3,16 | |
| A | figures 1,2 * | 4-15 | |
| Y | US 2012/249065 A1 (BISSONETTE MICHAEL [US] ET AL) 4 October 2012 (2012-10-04) | 2,3,16 | |
| A | * paragraphs [0038] - [0057]; figures 1-6 * | 4-15 | |
| A | EP 2 479 059 A1 (POWER RES ELECTRONICS B V [NL]) 25 July 2012 (2012-07-25) * abstract; figures 7,11 * | 1,5 | |
| A | WO 2013/076956 A1 (PANASONIC CORP [JP]) 30 May 2013 (2013-05-30) * abstract; figures 1-4 * | 1-3,5,16 | |
| A | DE 10 2010 015758 A1 (ELEKTRYON UG HAFTUNGSBESCHRAEKT [DE]) 5 January 2011 (2011-01-05) * abstract; figures 1-14 * | 1,10,16 | TECHNICAL FIELDS SEARCHED (IPC) B60L |
| A | DE 101 03 031 A1 (MARQUARDT RAINER [DE] SIEMENS AG [DE]) 25 July 2002 (2002-07-25) * abstract; figures 1-5 * | 1 | |
| A | WO 2011/124260 A1 (AREVA T & D UK LTD [GB]; DAVIDSON COLIN CHARNOCK [GB]; TRAINER DAVID []) 13 October 2011 (2011-10-13) * abstract; figures 1-4 * | 1 | |

-/--

The present search report has been drawn up for all claims

| Place of search | Date of completion of the search | Examiner |
|---|---|---|
| The Hague | 30 October 2014 | Albertsson, Gustav |

EPO FORM 1503 03.82 (P04C01)

**EUROPEAN SEARCH REPORT**

Application Number

EP 14 17 2484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Colin Dr ET AL: "A Methodology for Developing 'Chainlink' Converters", , 2009, XP055110437, Retrieved from the Internet: URL:http://ieeexplore.ieee.org/ielx5/52548 90/5278662/05278738.pdf?tp=&arnumber=52787 38&isnumber=5278662 [retrieved on 2014-03-27] * abstract * ----- | 1,3-9 | |

TECHNICAL FIELDS SEARCHED (IPC)

The present search report has been drawn up for all claims

| Place of search | Date of completion of the search | Examiner |
|---|---|---|
| The Hague | 30 October 2014 | Albertsson, Gustav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 17 2484

This annex lists the patent family members relating to the patent documents cited in the above-mentioned European search report.
The members are as contained in the European Patent Office EDP file on
The European Patent Office is in no way liable for these particulars which are merely given for the purpose of information.

30-10-2014

| Patent document cited in search report | Publication date | Patent family member(s) | | Publication date |
|---|---|---|---|---|
| DE 102011017597 A1 | 31-10-2012 | DE 102011017597 A1 | | 31-10-2012 |
| | | WO 2012146463 A1 | | 01-11-2012 |
| US 2012249065 A1 | 04-10-2012 | NONE | | |
| EP 2479059 A1 | 25-07-2012 | CA 2825010 A1 | | 26-07-2012 |
| | | CN 103429454 A | | 04-12-2013 |
| | | EP 2479059 A1 | | 25-07-2012 |
| | | EP 2665619 A2 | | 27-11-2013 |
| | | US 2013314038 A1 | | 28-11-2013 |
| | | WO 2012098202 A2 | | 26-07-2012 |
| WO 2013076956 A1 | 30-05-2013 | EP 2784900 A1 | | 01-10-2014 |
| | | JP 2013110871 A | | 06-06-2013 |
| | | WO 2013076956 A1 | | 30-05-2013 |
| DE 102010015758 A1 | 05-01-2011 | NONE | | |
| DE 10103031 A1 | 25-07-2002 | DE 10103031 A1 | | 25-07-2002 |
| | | DE 20122923 U1 | | 25-02-2010 |
| WO 2011124260 A1 | 13-10-2011 | EP 2556586 A1 | | 13-02-2013 |
| | | EP 2650999 A2 | | 16-10-2013 |
| | | WO 2011124260 A1 | | 13-10-2011 |

EPO FORM P0459

For more details about this annex : see Official Journal of the European Patent Office, No. 12/82